# FASCICULE DE BREVET EUROPEEN

(11) **EP 4 094 349 B1**
(45) Date de publication et mention de la délivrance du brevet: **09.12.2026**
(21) Numéro de dépôt: 21705244.8
(22) Date de dépôt: 18.01.2021
(51) Int. Cl.: H02K 9/14, H02K 9/19, H02K 11/33, H02K 16/00, H02K 7/116

(54) **SYSTEME DE REFROIDISSEMENT D'UN DISPOSITIF D'ENTRAINEMENT A PLUSIEURS MACHINES ELECTRIQUES**
SYSTEM ZUR KÜHLUNG EINER ANTRIEBSVORRICHTUNG MIT MEHREREN ELEKTRISCHEN MASCHINEN
SYSTEM FOR COOLING A DRIVE DEVICE WITH SEVERAL ELECTRIC MACHINES

(30) Priorité: 20.01.2020 FR 2000521
(43) Date de publication de la demande: 30.11.2022
(73) Titulaire: Safran Electrical & Power, 31702 Blagnac (FR)
(72) Inventeur: RENOTTE, Alexis, 77550 MOISSY-CRAMAYEL (FR); RAMBAUD, Julien Marc Nicolas, 77550 MOISSY-CRAMAYEL (FR); CASTELLI, Christophe, 77550 MOISSY-CRAMAYEL (FR); PORTE, Guillaume, 77550 MOISSY-CRAMAYEL (FR)
(74) Mandataire: Cabinet Camus Lebkiri
(86) Numéro de dépôt international: PCT/FR2021/050082
(87) Numéro de publication internationale: WO 2021/148744

(56) Documents cités:
- EP-A1- 0 786 853
- EP-A1- 2 774 853
- JP-A- S61 227 650
- US-A1- 2005 140 230

## Description

### DOMAINE TECHNIQUE DE L'INVENTION

Le domaine technique de l'invention est celui d'un système d'entrainement à propulsion par hélice comprenant un dispositif d'entrainement à plusieurs machines électriques et son système de refroidissement.

La présente invention concerne le refroidissement d'un dispositif d'entrainement à plusieurs machines électriques et en particulier le refroidissement du liquide de refroidissement du dispositif d'entrainement.

### ARRIERE-PLAN TECHNOLOGIQUE DE L'INVENTION

Il est connu des dispositifs d'entrainement d'au moins une hélice comprenant une machine électrique ou thermique et une boîte d'engrenage entrainée ou entrainant les machines électriques et l'hélice ou une turbine.

Les machines électriques peuvent être chacune un moteur électrique entrainant la boîte d'engrenage ou une génératrice électrique entrainée par la boîte d'engrenage par exemple dans le cas d'un dispositif d'entrainement à plusieurs machines électrique pour hélice hybride ou encore une machine électrique ayant un mode moteur et un mode générateur.

Il est notamment connu des dispositifs d'entrainement d'au moins une hélice qui soient motorisées via des machines électriques pour des véhicules de type à atterrissage et décollage verticale connue aussi de l'acronyme VTOL de l'anglais « vertical take-off and landing ». Ces dispositifs d'entrainement peuvent comprendre plusieurs machines électriques qui sont des moteurs électriques et une boîte d'engrenage entrainée par les moteurs électriques.

Les dispositifs d'entrainement à hélice électrique peuvent comprendre un échangeur air/huile pour refroidir l'huile circulant dans la boîte d'engrenage et les machines électriques peuvent aussi être refroidies par cette huile, notamment la partie électronique. L'échangeur air/huile peut être refroidi par un dispositif ventilateur comprenant une hélice entrainée par un moteur électrique.

Il existe aussi des systèmes d'entrainement à propulsion par hélice hybride ou thermique comprenant un dispositif d'entrainement pour la génération d'énergie électrique comprenant des machines électriques qui sont dans ce cas des génératrices électriques produisant de l'électricité à partir d'énergie en étant couplées à une boîte d'engrenage entrainée par un moteur thermique. En cas de fuite d'huile ou de dispositif ventilateur défaillant, le moteur thermique et la boîte d'engrenage sont dimensionnés pour avoir suffisamment d'inertie thermique pour permettre d'atterrir. Cependant les génératrices électriques peuvent ne pas avoir assez d'inertie électrique et se mettre en mode défaillant au-delà d'une température prédéterminée et entraîner un risque de batterie déchargée.

Pour les dispositifs d'entrainement à hélice électrique ou hybride, en cas de panne d'un des moteurs électriques, les autres moteurs électriques peuvent permettre de se déplacer en mode dégradé et ainsi atterrir le véhicule. Les machines électriques, notamment les unités de puissances des machines électrique comprennent des composants de puissance qui chauffent rapidement si elles ne sont pas refroidies et, au-delà d'une température, se mettent en sécurité. Le temps entre le moment de défaillance et la mise en sécurité des moteurs peut être trop court pour permettre d'atterrir. On peut ainsi développer un système de refroidissement indépendant pour chaque machine électrique, mais cela entraîne un surpoids et un surcout.

Il existe donc un besoin d'un système de refroidissement d'un dispositif d'entraînement à plusieurs machines électriques permettant d'améliorer le refroidissement en assurant le refroidissement en cas d'une panne tout en optimisant le poids et le surcoût de la machine.

### RESUME DE L'INVENTION

L'invention offre une solution au problème précédemment décrit de moteur ou ventilateur défaillant, en permettant d'avoir un système de refroidissement redondant, en ayant un circuit d'huile refroidi par plusieurs ventilateurs permettant ainsi en cas de pannes d'un ventilateur que les circuits de refroidissement air et huile continus d'être refroidi.

Il existe aussi des systèmes d'entrainement à propulsion par hélice hybride ou thermique comprenant un dispositif d'entrainement pour la génération d'énergie électrique comprenant des machines électriques qui sont dans ce cas des génératrices électriques produisant de l'électricité à partir d'énergie en étant couplées à une boîte d'engrenage entrainée par un moteur thermique. En cas de fuite d'huile ou de dispositif ventilateur défaillant, le moteur thermique et la boîte d'engrenage sont dimensionnés pour avoir suffisamment d'inertie thermique pour permettre d'atterrir. Cependant les génératrices électriques peuvent ne pas avoir assez d'inertie électrique et se mettre en mode défaillant au-delà d'une température prédéterminée et entraîner un risque de batterie déchargée.

Il est connu du document US2005140230 un moteur électrique comprenant une pluralité de rotors et une pluralité de stators. Chaque rotor possède un arbre d'entraînement monté dans des roulements et un pignon est monté sur chaque arbre. Les pignons engrènent avec un engrenage principal qui est relié à un arbre d'entraînement principal monté dans des roulements.

Pour les dispositifs d'entrainement à hélice électrique ou hybride, en cas de panne d'un des moteurs électriques, les autres moteurs électriques peuvent permettre de se déplacer en mode dégradé et ainsi atterrir le véhicule. Les machines électriques, notamment les unités de puissances des machines électrique comprennent des composants de puissance qui chauffent rapidement si elles ne sont pas refroidies et, au-delà d'une température, se mettent en sécurité. Le temps entre le moment de défaillance et la mise en sécurité des moteurs peut être trop court pour permettre d'atterrir. On peut ainsi développer un système de refroidissement indépendant pour chaque machine électrique, mais cela entraîne un surpoids et un surcout.

Il existe donc un besoin d'un système de refroidissement d'un dispositif d'entraînement à plusieurs machines électriques permettant d'améliorer le refroidissement en assurant le refroidissement en cas d'une panne tout en optimisant le poids et le surcoût de la machine.

### RESUME DE L'INVENTION

L'invention offre une solution au problème précédemment décrit de moteur ou ventilateur défaillant, en permettant d'avoir un système de refroidissement redondant, en ayant un circuit d'huile refroidi par plusieurs ventilateurs permettant ainsi en cas de pannes d'un ventilateur que les circuits de refroidissement air et huile continus d'être refroidi.

L'invention concerne un système d'entraînement à plusieurs machines selon la revendication 1.

Grâce à l'invention, du fait qu'il y a plusieurs ventilateurs qui assurent ainsi que le liquide de refroidissement soit refroidi dans l'échangeur thermique, même en cas de panne d'un moteur électrique, il y aura au moins un autre ventilateur fonctionnant pour refroidir le liquide réfrigérant. En outre il n'y a pas de moteur électrique supplémentaire pour entrainer les ventilateurs, c'est-à-dire dédié uniquement pour l'entraînement des ventilateurs. En outre, étant donné que la boîte d'engrenage est refroidie par un système hydraulique dont le liquide est refroidi par une ventilation redondante, il y a moins d'échauffement de la boîte d'engrenage pouvant permettre ainsi de diminuer son inertie et donc son volume ou/et d'augmenter la durée de vie de la boîte d'engrenage.

Outre les caractéristiques qui viennent d'être évoquées dans le paragraphe précédent, le système de refroidissement selon un ou plusieurs modes de réalisation de l'invention peut présenter une ou plusieurs caractéristiques complémentaires parmi celles évoquées dans les paragraphes suivants, considérées individuellement ou selon toutes les combinaisons techniquement possibles.

Selon un mode de réalisation, la partie de refroidissement dans une boîte d'engrenage du dispositif d'entrainement pour la refroidir est en outre une partie de lubrification de la boîte d'encastrement.

Selon un mode de réalisation, le circuit de refroidissement par air comprend au moins un ventilateur par machine électrique et chaque ventilateur est couplé en rotation avec la machine électrique correspondante. Le fait qu'il y a un ventilateur par machine électrique couplé avec celle-ci, assure ainsi que le liquide de refroidissement soit refroidi dans l'échangeur thermique, même en cas de panne d'un moteur électrique, il y aura au moins un autre ventilateur avec une autre machine électrique fonctionnant pour refroidir le liquide réfrigérant.

Selon un mode de réalisation, le circuit de refroidissement par air comprend un conduit d'air machine, ventilé par les ventilateurs, pour refroidir une des machines électriques. Cela permet qu'en cas de fuite d'huile, la machine électrique est toujours refroidie par la ventilation d'air. En outre dans le cas d'une combinaison avec le mode de réalisation précédent, cela permet d'utiliser la ventilation d'air des machines électriques à la fois pour la machine électrique et pour l'échangeur thermique.

Selon un exemple de ce mode de réalisation, le conduit d'air machine est une partie d'un ensemble électronique de puissance des moteurs électriques pour refroidir des composants de l'ensemble électronique de puissance. Cela permet que l'ensemble électronique de puissance de la machine électrique soit toujours refroidis par la ventilation d'air.

Selon un exemple de ce mode de réalisation, le conduit d'air machine permet de refroidir un bobinage d'un stator de la machine électrique. Cela permet que le bobinage de la machine électrique soit toujours refroidi par la ventilation d'air sauf si la machine électrique est défectueuse auquel cas il n'est plus nécessaire de refroidir le bobinage.

Selon un mode de réalisation, le circuit de refroidissement par air comprend une ouverture d'entrée traversant une paroi avant d'un carter du dispositif d'entrainement pour faire entrer l'air dans le circuit de refroidissement par air.

Selon un exemple de ce mode de réalisation, l'ouverture d'entrée est axiale par rapport à un axe de l'hélice du système d'entrainement à propulsion.

Par entrée axiale, on entend qu'elle traverse une paroi axialement par rapport à un axe de l'hélice du système d'entrainement à propulsion.

Selon un exemple de ce mode de réalisation, l'ouverture d'entrée est radiale. Par entrée radiale, on entend qu'elle traverse une paroi radialement par rapport à un axe de l'hélice.

Selon un exemple de ce mode de réalisation, le circuit de refroidissement par air comprend des ouvertures d'entrées entourant la boîte d'engrenage du dispositif d'entrainement à plusieurs machines électriques. Les ouvertures d'entrées peuvent être axiales, radiales ou les deux.

Selon un exemple de ce mode de réalisation, le circuit de refroidissement par air comprend une ouverture d'entrée d'air par machine électrique.

Selon une mise en œuvre de cet exemple, le circuit de refroidissement par air comprend un conduit de guidage par ouverture d'entrée pour faire circuler l'air de l'ouverture d'entrée à au moins une machine électrique. Cela permet d'améliorer le débit d'air et donc le refroidissement par le circuit de refroidissement par air.

Selon un exemple de cette mise en œuvre, chaque ouverture d'entrée d'air est voisine angulairement entre deux machines électriques et chaque conduit de guidage comprend deux canaux s'étendant chacune d'une des deux machines électrique voisines à un canal amont s'étend à partir de l'ouverture d'entrée. Cela permet qu'en cas d'un conduit de guidage, la machine électrique est refroidie au moins par l'air provenant de l'autre conduit de guidage.

Selon un mode de réalisation, le circuit de refroidissement par air comprend un conduit d'échangeur pour guider l'air d'au moins un ventilateur vers l'échangeur. Cela permet de guider directement l'air du ventilateur vers l'échangeur et donc améliorer l'échange thermique air/liquide de refroidissement.

Selon un mode de réalisation, le circuit hydraulique comprend un conduit partie machine électrique pour refroidir une des machines électriques. Cela permet d'avoir un meilleur refroidissement que par ventilation à air ou d'être redondant avec le refroidissement à air dans le cas où le circuit de refroidissement à air comprend un conduit d'air machine électrique. Le conduit partie machine électrique est différent de l'échangeur thermique air/liquide du circuit hydraulique. Le conduit de partie machine électrique permet de refroidir la partie machine même si ce conduit peut en outre être refroidie par de l'air alors que l'échangeur thermique air/liquide est conçu pour refroidir son liquide hydraulique, l'échangeur thermique peut être en contact avec une partie de la machine électrique pour refroidir cette partie mais ne fait pas partie de la machine. L'échangeur thermique air/liquide est donc externe à chaque machine électrique.

Selon un exemple de ce mode de réalisation, le conduit partie machine électrique comprend une partie d'un ensemble électronique de puissance des moteurs électriques pour refroidir des composants de l'ensemble électronique de puissance. Cela permet d'avoir un meilleur refroidissement que par ventilation. En outre dans le cas d'une combinaison avec l'exemple du mode de réalisation précédent dans lequel l'ensemble électronique de puissance est refroidi par ventilation, cela peut permettre d'avoir une redondance de refroidissement et de refroidir en cas soit de ventilateur défectueux ou en cas de fuite d'huile.

Selon une mise en œuvre de cet exemple de ce mode de réalisation, le circuit hydraulique est agencé pour refroidir les ensembles électroniques de puissance des moteurs électriques déportés des machines électriques.

Par ensemble électronique de puissance des moteurs électriques déporté, on entend que les composants de puissance alimentant électriquement les parties électromagnétiques des machine électrique (rotor et stator) ne sont pas directement fixées au carter machine supportant les parties électromagnétiques de la machine électrique. Par exemple, les ensembles électroniques de puissance de chaque machine électrique sont regroupés dans une unité de puissance du système de propulsion fixée à un carter du système de propulsion.

Selon un exemple de ce mode de réalisation, la partie machine électrique permet de refroidir un bobinage d'un stator de la machine électrique. Cela permet d'avoir un meilleur refroidissement que par ventilation. En outre, dans le cas d'une combinaison avec l'exemple du mode de réalisation précédent dans lequel le bobinage est refroidi par ventilation, cela peut permettre d'avoir une redondance de refroidissement et de refroidir en cas soit de ventilateur défectueux ou en cas de fuite d'huile.

Selon une mise en œuvre, chaque conduit partie machine électrique du circuit hydraulique est situé dans le stator ou/et une partie d'un ensemble électronique de puissance des moteurs électriques pour refroidir des composants de l'ensemble électronique de puissance. Selon un exemple, chaque machine électrique peut comprendre un circuit de lubrification dans le rotor séparé du circuit hydraulique pour lubrifier les paliers de la machine électrique.

Selon un mode de réalisation le circuit de liquide de refroidissement comprend un réservoir de liquide de refroidissement pour fournir le liquide de refroidissement à la boîte d'engrenage et une pompe pour faire circuler le liquide de refroidissement de la boîte d'engrenage au réservoir de liquide de refroidissement via l'échangeur air/liquide de refroidissement.

Un autre aspect de l'invention concerne un système d'entrainement à propulsion par hélice à plusieurs machines électriques comprenant :
- un dispositif d'entraînement comprenant :
   - une pluralité de machines électriques comprenant un rotor, un stator et un carter,
   - une boîte d'engrenage comprenant :

   - un engrenage par machine électrique, engrainé chacun avec le rotor de la machine électrique,
   - ,au moins une roue de propulsion entrainée par le biais d'engrenages avec chaque rotor de machine électrique, et
- le système de refroidissement selon l'une des caractéristiques décrites précédemment.

Le système d'entrainement à propulsion par hélice à plusieurs machines électriques selon un ou plusieurs modes de réalisation de l'invention peut présenter une ou plusieurs caractéristiques complémentaires parmi celles évoquées dans les paragraphes suivants, considérées individuellement ou selon toutes les combinaisons techniquement possibles.

Selon un mode de réalisation chaque machine électrique comprend en outre un ensemble électronique de puissance.

Selon un exemple, l'ensemble électronique de puissance de chaque machine électrique est situé entre le ventilateur et le rotor.

Selon un autre exemple, l'ensemble électronique de puissance est situé entre le rotor et le support palier avant ou entre le stator et le carter de la machine électrique. Par exemple, l'ensemble électronique est situé entre des conduits d'air machine.

Selon un mode de réalisation le système d'entrainement comprend une unité électronique comprenant des ensembles électroniques de puissance de chaque machine électrique, le circuit hydraulique étant agencé pour refroidir l'unité électronique.

Selon un exemple de ce mode de réalisation, l'unité électronique est en contact contre l'échangeur thermique pour la refroidir.

Selon un exemple des deux modes de réalisation précédent, le circuit de refroidissement par air comprend un conduit d'apport air échangeur dans lequel l'unité électronique est située, le conduit d'apport air échangeur comprenant une extrémité ouverte reliée à l'échangeur thermique.

Selon une mise en œuvre de cet exemple, le conduit d'apport air échangeur comprend un canal par ventilateur comprenant chacun une ouverture reliée aux machines électriques.

Selon un mode de réalisation l'échangeur thermique air/liquide est séparée et éloignée de chaque machine électrique. (par séparée et éloignée on entend que l'échangeur thermique n'est pas en contact).

Selon un mode de réalisation l'échangeur thermique air/liquide est séparée et éloignée du stator et rotor de la machine électrique. Selon un exemple de ce mode de réalisation l'unité électronique en contact contre l'échangeur thermique pour la refroidir.

Selon un mode de réalisation, le dispositif d'entrainement comprend un carter pour recevoir la boîte d'engrenage et la pluralité de machines électriques, et le circuit de refroidissement par air comprend au moins une ouverture d'entrée traversant le carter pour aspirer l'air extérieur par les ventilateurs et une évacuation de l'air et une sortie d'air opposée à l'ouverture d'entrée.

Selon un mode de réalisation, chaque machine électrique comprend le ventilateur correspondant solidaire en rotation avec le rotor de la machine électrique correspondante.

Selon une variante du mode de réalisation précédent, la boîte d'engrenage comprend au moins deux ventilateurs et chaque ventilateur est couplé par le biais d'un engrenage ventilateur aux rotors des machines électriques. L'engrenage ventilateur comprend ainsi une roue dentée faisant partie du ventilateur engrenée avec une roue dentée de la boîte d'engrenage, par exemple une roue dentée intermédiaire, ou directement avec la roue de propulsion. Selon un exemple, la boîte d'engrenage comprend un ventilateur par machine électrique.

Selon un mode de réalisation, le système comprend un embrayage entre chaque machine électrique et la boîte d'engrenage.

Selon un mode de réalisation, la boîte d'engrenage comprend pour chaque machine électrique, une roue machine intermédiaire entre le rotor et la roue de propulsion. Cela permet d'augmenter soit la vitesse soit le couple à la roue de propulsion par rapport aux machines électriques.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] montre un schéma de principe d'un exemple d'un véhicule à atterrissage et décollage verticale comprenant un système d'entrainement à propulsion par hélice à plusieurs machines électriques comprenant un système de refroidissement selon un premier ou un deuxième mode de réalisation de l'invention.
[Fig. 2] montre un schéma de principe selon une section axiale du système d'entrainement à propulsion par hélice à plusieurs machines électriques, comprenant un système de refroidissement selon un premier exemple du premier mode de réalisation de l'invention.
[Fig. 3] montre un schéma de principe selon une section axiale du système d'entrainement à propulsion par hélice à plusieurs machines électriques comprenant un système de refroidissement selon un deuxième exemple du premier mode de réalisation de l'invention.
[Fig. 4a] montre un schéma de principe selon une vue tridimensionnelle d'une machine électrique du système d'entrainement à propulsion par hélice à plusieurs machines électriques du premier ou deuxième exemple de ce mode de réalisation.
[Fig. 4b] montre un schéma de principe partiel d'une demi-coupe axiale de la machine électrique de la figure 4a.
[Fig. 5] montre un schéma de principe selon une vue de dessus d'un exemple du système d'entrainement à propulsion par hélice à plusieurs machines électriques de la figure 3.
[Fig. 6] montre un schéma de principe selon une section axiale du système d'entrainement à propulsion par hélice à plusieurs machines électriques comprenant un système de refroidissement selon un troisième exemple de ce mode de réalisation de l'invention.
[Fig. 7] montre un schéma de principe selon une vue tridimensionnelle d'un conduit à multiple canaux du système de refroidissement selon le troisième mode de réalisation de l'invention.
[Fig. 8] montre un schéma de principe selon une section axiale du système d'entrainement à propulsion par hélice à plusieurs machines électriques comprenant un système de refroidissement selon un exemple du deuxième mode de réalisation.
[Fig. 9] montre un schéma de principe vue de dessus axiale d'un système d'entrainement à propulsion par hélice à plusieurs machines électriques comprenant un système de refroidissement selon un deuxième mode de réalisation.

### DESCRIPTION DETAILLEE

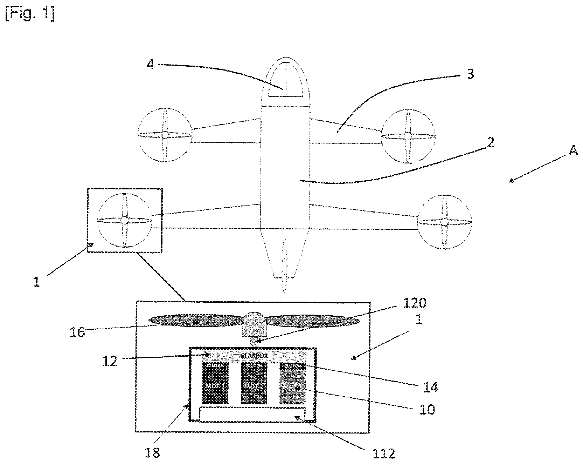

La figure 1 montre une représentation d'un schéma de principe d'un véhicule à atterrissage et décollage verticale A.

Le véhicule à atterrissage et décollage verticale A comprend en outre un corps de transport 2 comprenant un fuselage, quatre ailes 3 s'étendant du fuselage, et une cabine 4 à l'avant du fuselage et en outre à chaque extrémité des ailes 3, un système d'entrainement à propulsion par hélice à plusieurs machines électriques 1

Bien entendu le véhicule à atterrissage et décollage verticale A est un exemple et peut comporter plus ou moins de système d'entrainement à propulsion par hélice à une ou plusieurs machines électriques 1 et peuvent être situés dans d'autres positions, notamment dans le fuselage ou dans les ailes 3.

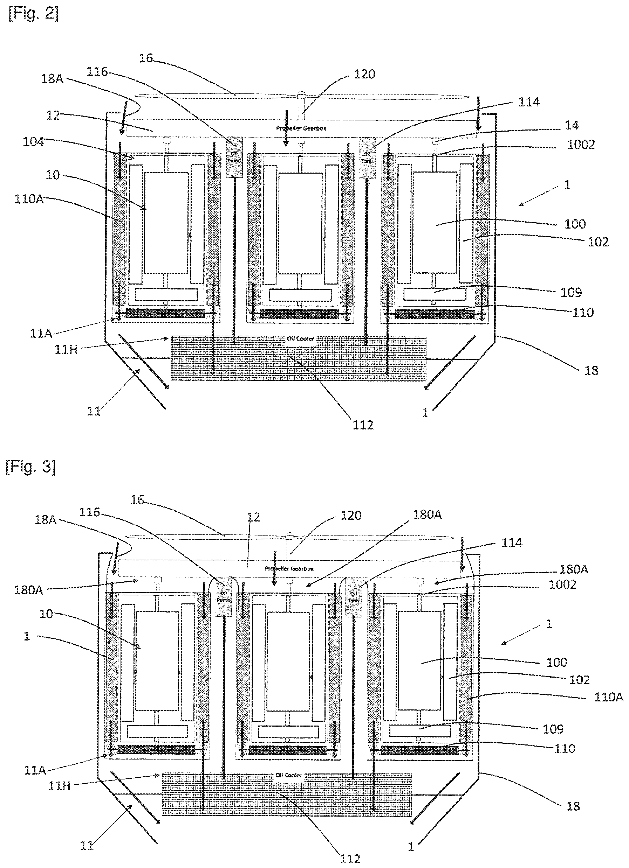

La figure 1 montre un agrandissement schématique du système d'entrainement à propulsion par hélice à plusieurs machines électriques 1, appelé dans la suite système d'entrainement 1. Le système d'entrainement 1 comprend un dispositif d'entrainement à plusieurs machines électriques, appelé dans la suite dispositif d'entrainement. Le dispositif d'entrainement comprend en l'occurrence trois machines électriques 10 mais pourrait n'en comporter qu'une, deux ou plus que trois, par exemple quatre machines électriques 10. Chaque machine électrique 10 comprend un rotor 100 comprenant un arbre rotor 1002 s'étendant axialement, un stator 102 comprenant un bobinage entourant le rotor 100, un carter machine 104 entourant et supportant le stator 102 et comprenant deux paliers à chaque extrémité du rotor axialement pour supporter l'arbre rotor 1002, représentés sur la figure 2 décrite en détail dans la suite.

La figure 2 montre un schéma de principe du système d'entrainement 1 représenté sur la figure 1. Le schéma de principe montre, selon une vue d'une coupe axiale, les machines électriques 10. Les machines électriques 10 sont représentées dans le schéma de principe alignées mais sont dans cet exemple réparties autour d'un axe de rotation de l'hélice. En l'occurrence, les machines électriques sont disposées régulièrement autour de l'axe de rotation de l'hélice. Ainsi, chaque axe de rotation du rotor de chaque machine se situe au sommet d'un triangle équilatéral pour diminuer l'encombrement.

Le dispositif d'entrainement comprend en outre une boîte d'engrenage 12 engrenée avec chaque machine électrique 10.

En l'occurrence, dans cet exemple le système d'entrainement 1 comprend en outre un embrayage 14 par machine électrique 10 entre la boîte d'engrenage 12 et l'arbre rotor 1002 de la machine électrique 10 correspondante. Autrement dit, l'embrayage peut, dans une position désembrayée, désaccoupler l'arbre rotor 1002 de la machine électrique 10 correspondante avec la boîte d'engrenage 12 et dans une position embrayée, accoupler l'arbre rotor 1002 de la machine électrique 10 correspondante avec la boîte d'engrenage 12.

La boîte d'engrenage 12 comprend un arbre de sortie propulsion 120 comprenant l'axe de rotation de l'hélice 16, couplé à l'aide d'engrenage avec chaque arbre rotor 1002 lorsque l'embrayage 14 correspondant est dans la position embrayée.

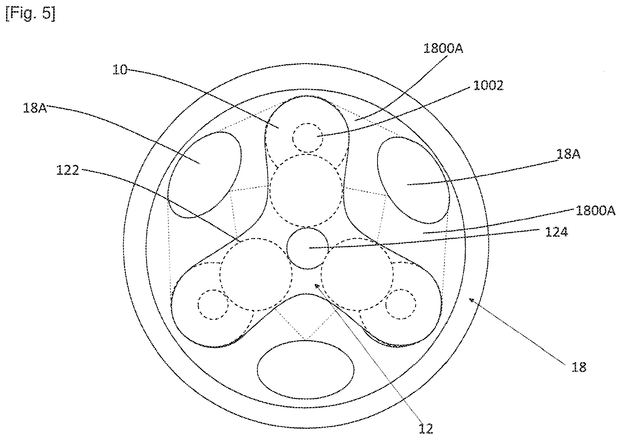

L'engrenage de la boîte d'engrenage 12, représenté sur la figure 5, peut comprendre des roues dentées intermédiaires entre l'arbre de sortie propulsion 120 et une roue dentée directement couplée à l'arbre rotor d'une machine correspondante. Par exemple, la boîte d'engrenage comprend une roue machine intermédiaire 122 par machine électrique. Elles sont couplées chacune avec une roue dentée liée avec l'arbre rotor 1002 d'une machine électrique et une roue de propulsion 124 couplée en rotation avec arbre de sortie propulsion 120 ou entrainant directement l'arbre de sortie propulsion 120.

Le système d'entrainement 1 comprend en outre au moins une hélice 16, en l'occurrence une seule hélice comprenant quatre pales, entrainée par la roue de propulsion du dispositif d'engrènement 12 du dispositif d'entrainement. Bien entendu, l'hélice peut comprendre moins ou plus que quatre pales par exemple entre deux et dix pales. Le système d'entrainement 1 peut comprendre par exemple plus qu'une hélice, par exemple deux hélices coaxiales.

Le système d'entrainement 1 comprend un système de refroidissement 11 pour refroidir le dispositif d'entraînement selon un premier exemple d'un premier mode de réalisation.

Le système de refroidissement 11 comprend un circuit hydraulique 11H d'un liquide de refroidissement et circuit de refroidissement par air 11A.

Le circuit hydraulique 11H comprend une partie de refroidissement dans la boîte d'engrenage 12 pour la refroidir.

Le circuit hydraulique 11H comprend un échangeur thermique 112 air/liquide de refroidissement, un réservoir 114 de liquide de refroidissement pour fournir le liquide de refroidissement à la boîte d'engrenage et une pompe 116 pour faire circuler le liquide de refroidissement de la boîte d'engrenage 12 au réservoir 114 de liquide de refroidissement via l'échangeur 112 air/liquide de refroidissement. Selon un autre exemple, la pompe fait circuler le liquide de refroidissement du réservoir 114 à la boîte d'engrenage 12 par le biais de l'échangeur et du réservoir 114 de liquide de refroidissement. L'échangeur thermique air/liquide 112 est conçu pour refroidir son liquide hydraulique. L'échangeur thermique air/liquide 12 est externe de chaque machine électrique 10 mais peut être en contact avec une partie d'une machine électrique 10 pour refroidir cette partie sans faire partie de la machine électrique 10.

Le liquide de refroidissement est en l'occurrence de l'huile dans ce mode de réalisation, mais pourrait être un autre liquide de refroidissement.

L'échangeur 112 comprend de façon connue des parois de refroidissement formant des canaux de circulation du liquide de refroidissement pour son refroidissement par de l'air circulant entre ces canaux de circulation.

Dans ce mode de réalisation, la partie de refroidissement dans la boîte d'engrenage 12 du circuit hydraulique 11H est à l'intérieur de la boîte d'engrenage 12 permettant à l'huile d'être en contact direct avec les engrenages pour en outre lubrifier les engrenages.

Le système d'entrainement 1 comprend en outre dans cet exemple, un carter 18 contenant la boîte d'engrenage 12, les machines électriques 10 et le système de refroidissement 11 comprenant le circuit hydraulique 11H d'un liquide de refroidissement et le circuit de refroidissement par air 11A. La boîte d'engrenage 12, les machines électriques 10 et l'échangeur 112 du circuit hydraulique 11H sont fixés au carter 18.

Le circuit de refroidissement par air 11A comprend une pluralité de ventilateur 110, couplés en rotation avec la boîte d'engrenage 12.

En particulier, dans ce premier mode de réalisation, le circuit de refroidissement par air 11A comprend un ventilateur 110 par machine électrique 10. Chaque ventilateur est couplé en rotation avec l'arbre rotor 1002 du rotor 100 de la machine électrique 10 correspondante. En l'occurrence, chaque ventilateur 110 est directement couplé en rotation au rotor 100 et comprend le même axe de rotation.

Chaque ventilateur permet ainsi dans ce premier mode de réalisation d'aspirer ou expulser de l'air pour faire circuler de l'air dans le carter 18 pour refroidir les machines électrique 10.

En outre, dans ce premier mode de réalisation, le carter 18 comprend des ouvertures d'entrée 18A d'air tout autour de la boîte d'engrenage 12 pour permettre de faire entrer l'air extérieur dans le carter 18. Les ouvertures d'entrées 18A font donc aussi parties du circuit de refroidissement par air 11A et sont en l'occurrence des ouvertures d'entrées 18A avant axiales située sur une paroi avant du carter entre l'hélice 16 et la boîte d'engrenage 12 mais les ouvertures d'entrées pourraient aussi être radiales par exemple dans une paroi du carter entourant les machines électriques.

L'air circulant dans le système d'entrainement, est représenté par des flèches. L'air rentre par les ouvertures 18A par l'aspiration des ventilateurs 110 lèche les surfaces de la boîte d'engrenage 12, vient ensuite refroidir chaque machine électrique 10, puis vient lécher les parois de l'échangeur air/liquide de refroidissement 112 formant les canaux dans lequel circule le liquide de refroidissement en l'occurrence de l'huile. Enfin, l'air s'échappe par une ou des ouvertures axiales arrière, en l'occurrence une seule ouverture axiale arrière. Par arrière on entend, la partie du système d'entrainement opposée à l'hélice située donc à l'avant.

La figure 3 représente un deuxième exemple du premier mode de réalisation du système de refroidissement de l'invention. Dans cet exemple, le circuit de refroidissement par air 11A comprend un conduit de guidage avant 180A par machine électrique 10 s'étendant chacune d'une ouverture d'entrée 18A traversant axialement le carter 18 vers la machine électrique 10 correspondante. Un tel conduit de guidage permet d'améliorer l'échange thermique Air des machines électriques. En particulier, dans cet exemple, chaque ouverture d'entrée d'air est voisine angulairement de deux machines électriques en étant située angulairement entre les deux machines électriques 10 et chaque conduit de guidage comprend deux canaux 1800A s'étendant de l'ouverture d'entrée à chacune une des deux machines électrique voisines 10.

La figure 5 représente une vue de dessus du dispositif d'entrainement du système d'entrainement à propulsion par hélice à plusieurs machines électriques de la figure 3 dans lequel on peut apercevoir en pointillé les canaux 1800A du conduit 180A. Autrement dit, chaque machine électrique 10 reçoit de l'air circulant par deux canaux provenant de deux ouvertures d'entrées. Cela permet d'avoir, en cas d'un conduit bouché, de l'air aspiré par un autre conduit de guidage.

Bien entendu on pourrait avoir un conduit ayant un seul canal reliant l'ouverture d'entrée dédiée à une seule machine électrique 10 mais en cas de conduit ou d'ouverture d'entrée bouché, le débit d'air aspiré par le ventilateur dédié à la machine serait insuffisant pour refroidir la machine électrique.

Pour améliorer le refroidissement des machines électriques 10 dans ces deux exemples de ce premier mode de réalisation, le circuit de refroidissement par air 11A comprend au moins un conduit d'air machine 110A par machine électrique 10. Chaque machine électrique 10 comprend donc un conduit d'air machine 110A.

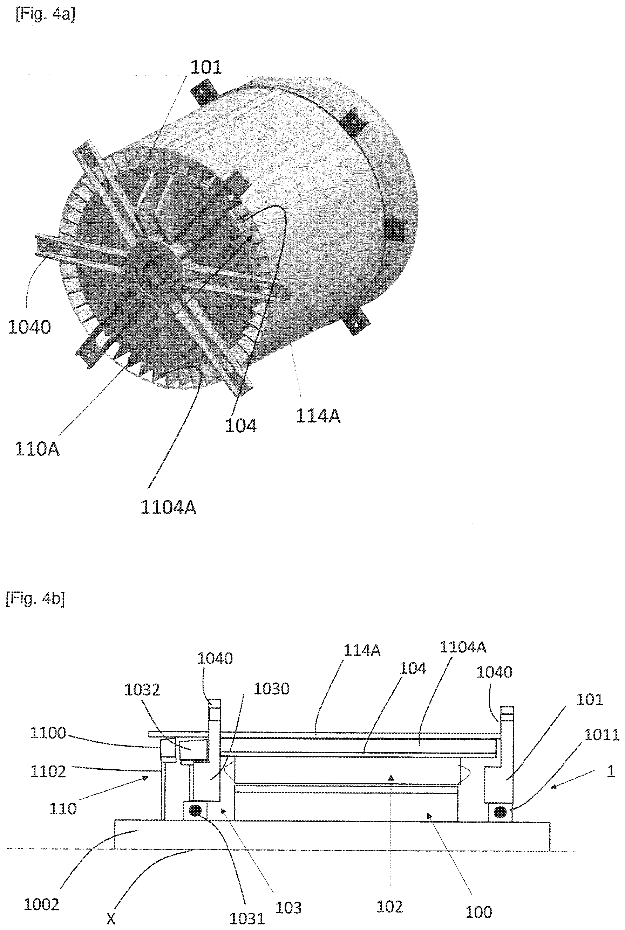

La figure 4a représente une machine électrique 10 en perspective respectivement vue de l'arrière dans lequel on peut voir le conduit d'air machine 110A. La figure 4b représente un schéma de principe d'une demi coupe axiale de la machine électrique 10.

Chaque machine électrique 10 comprend une paroi cylindrique externe 114A entourant le carter machine 104. Le conduit d'air machine 110A étant délimitée entre le carter machine 104 et la paroi cylindrique externe 114A.

Le conduit d'air machine 110A est dans le deuxième exemple de ce mode de réalisation, raccordé aux deux conduits de guidage 18A.

Dans ces exemples de ce mode de réalisation, chaque machine électrique 10 comprend un support palier avant 101 s'étendant radialement et comprend un des deux paliers, en l'occurrence un roulement 1011, traversé par l'arbre rotor 1002. Le support palier avant 101 ferme ainsi un entrefer entre le rotor 100 et le stator 102. En l'occurrence le support palier avant 101 est monté contre le carter machine 104.

En outre, dans ces exemples de ce mode de réalisation, chaque machine électrique 10 comprend un support palier arrière 103 visible sur la figure 4b s'étendant radialement comprenant une plaque support 1030 et un palier 1031, en l'occurrence un roulement, en particulier un roulement à bille traversé par l'arbre rotor 1002. Le support palier arrière 103 est fixé au carter machine 104 et en l'occurrence au carter 18.

Dans ces exemples de ce mode de réalisation, chaque machine électrique 10 comprend des pattes de fixation 1040 s'étendant du carter machine 104 pour se fixer au carter 18. En l'occurrence dans cet exemple le support palier avant 101 et le support palier arrière 103 comprennent chacun les pattes de fixation 1040 s'étendant radialement et traversant le carter machine 104 pour se fixer au carter 18.

Dans ces exemples de ce mode de réalisation, chaque machine électrique 10 comprend en outre un ensemble électronique de puissance 109. L'ensemble électronique de puissance 109 est dans cet exemple situé entre le ventilateur 110 et le rotor 100 mais pourrait être aussi entre le rotor 100 et le support palier avant 101 ou autour du moteur électrique 10.

En outre dans ces deux exemples de ce mode de réalisation, chaque ventilateur 110 comprend un ensemble de pales externes 1100, et une couronne intermédiaire 1102 à partir duquel s'étend radialement l'ensemble de pales externes 1100 vers l'extérieur par rapport à l'axe de rotation X de l'arbre rotor 1002.

L'ensemble de pales externes 1100 est en rotation en vis-à-vis du conduit d'air machine 110A.

En outre dans ces deux exemples de ce premier mode de réalisation, le conduit d'air machine 110A comprend des ailettes 1104A longeant axialement le carter machine 104 formant entre elles une pluralité de canaux de refroidissement. Les ailettes 1104A s'étendent chacune du carter machine 104 pour le refroidir et donc ainsi refroidir le stator et ainsi les bobines du stator pour augmenter son rendement.

La plaque support 1030 comprend en outre un ensemble de pales internes 1032 dont une pale est visible sur la figure 4b. Chaque pale interne 1032 est courbée et fixe au carter 18 et s'étend en vis-à-vis du conduit 110A pour guider l'air ventilé par le ventilateur 110 dans la pluralité de canaux du conduit d'air machine 110A.

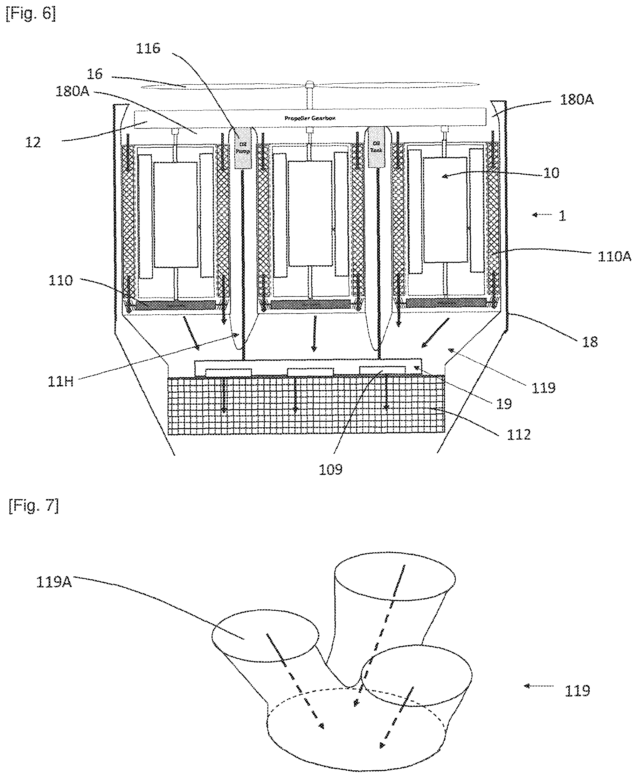

La figure 6 représente un système de refroidissement 11 selon un troisième mode de réalisation.

Le système de refroidissement 11 selon le troisième exemple du premier mode de réalisation est identique au deuxième exemple sauf en ce que les ensembles électroniques de puissance 109 de chaque machine électrique 10 sont déportés et regroupés dans une unité électronique de puissance 19 et en ce que le conduit de ventilation d'air 11A comprend en outre un conduit d'apport air échangeur 119 pour guider l'air d'au moins un ventilateur 110 vers l'échangeur 12.

En l'occurrence, dans cet exemple l'unité électronique de puissance 19 est située dans le conduit d'apport air échangeur 119 contre l'échangeur 12 pour permettre de refroidir l'unité de puissance par le biais du circuit de refroidissement par air 11A et par le circuit hydraulique 11H.

L'unité électronique de puissance 19 peut comporter des ailettes et des ouvertures la traversant pour améliorer son refroidissement, les ouvertures pouvant être un conduit d'air machine. En outre le conduit d'apport air échangeur 119 comprend un canal 119A par ventilateur 110. La figure 7 représente un schéma de principe en perspective du conduit d'apport air échangeur 119. Les flèches montrent le sens de circulation de l'air dans les canaux 119A. Ce conduit d'apport air échangeur 119 peut aussi être installé sur les deux exemples précédents.

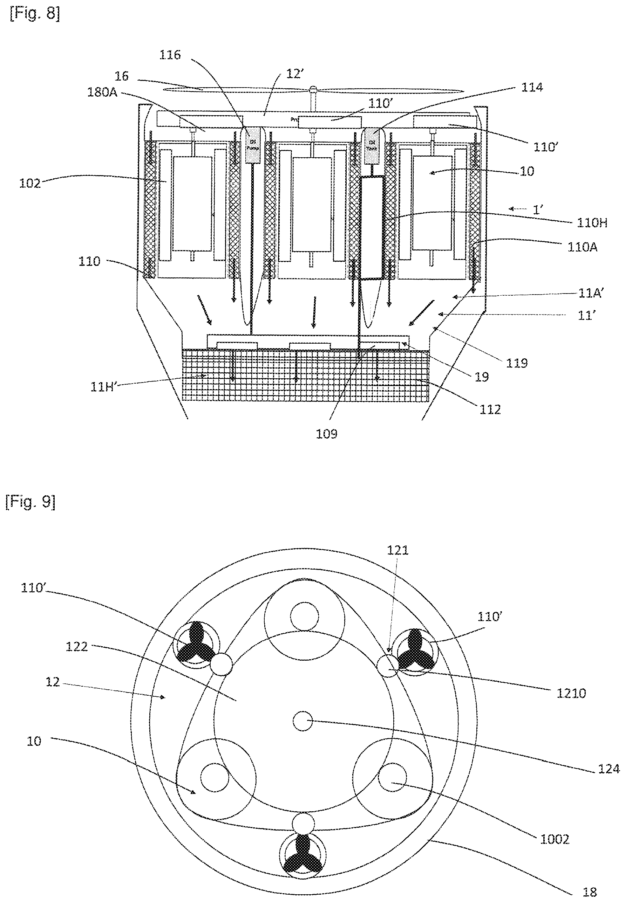

Les figures 8 et 9 représentent un schéma de principe respectivement selon une vue d'une section axiale et une vue axiale de l'avant, d'un système d'entrainement à hélice 1' comprenant un système de refroidissement 11' différent du troisième exemple du premier mode de réalisation dans lequel la boîte d'engrenage 12' comprend les ventilateurs110' du circuit de refroidissement par air 11A' et dans lequel le circuit hydraulique 11H' comprend au moins un conduit partie machine électrique 110H pour refroidir une des machines électriques 10. Le système d'entrainement à hélice 1' comprend donc un engrenage ventilateur 121, représenté sur la figure 9, par ventilateur pour coupler chaque ventilateur à la roue de propulsion 122. L'engrenage ventilateur 121 comprend en l'occurrence une roue dentée intermédiaire 1210 engrenée avec une roue dentée du ventilateur 110'.

Dans cet exemple de ce mode de réalisation, le circuit de refroidissement par air 11A' comprend comme dans le premier mode de réalisation un ventilateur 110' par machine électrique mais pourrait en comporter que deux ou plus que trois.

Le circuit hydraulique 11H' comprend en l'occurrence un conduit partie machine électrique 110H par machine dont seulement deux sont représentées sur la figure 8 pour refroidir chacune le stator 102 de la machine électrique 10 correspondante. En particulier dans cet exemple, le circuit hydraulique 11H' comprend une deuxième partie machine électrique traversant l'unité électronique de puissance 19 permettant aussi de le refroidir. Dans cet exemple, le conduit partie machine électrique 110H est situé entre une sortie de l'échangeur thermique 112 et une entrée du réservoir à huile 114 mais pourrait être selon l'autre exemple dans lequel le liquide de refroidissement circule dans l'autre sens, entre une entrée de la pompe 116 et une sortie de l'échangeur thermique 112. Dans ces deux exemples, le fluide de refroidissement, en l'occurrence l'huile est donc refroidi dans l'échangeur thermique 112 avant de circuler dans le conduit partie machine électrique 110H.

Bien entendu, selon des mises en œuvre, non représentées, des autres exemples du premier mode de réalisation, le circuit hydraulique 11H' peut être comme l'un de ces deux exemples. Notamment dans le cas des exemples d'ensemble électronique 109 située dans le carter machine électrique 104, le conduit partie machine peut soit refroidir l'ensemble électronique 109 par le biais du carter machine 104 soit comprend un circuit traversant le carter machine 104 pour être en contact avec un dissipateur support de l'ensemble électronique 109.

En outre selon un autre exemple non représenté, le circuit de refroidissement par air 11A' de ce deuxième mode de réalisation peut être dépourvu du conduit d'apport air échangeur 119 comme dans le premier exemple ou le deuxième exemple du premier mode de réalisation. Bien entendu, dans ce deuxième mode de réalisation, l'ensemble électronique de puissance peut être intégré dans chaque machine électrique comme dans le premier exemple ou le deuxième exemple du premier mode de réalisation ou regroupé en une unité électronique de puissance 19.

En outre selon un autre exemple non représenté, le circuit de refroidissement par air 11A' de ce deuxième mode de réalisation peut être dépourvu du conduit de guidage 180A comme dans le premier exemple du premier mode de réalisation.

En outre selon un autre exemple non représenté, le circuit de refroidissement par air 11A' de ce deuxième mode de réalisation peut comprendre les ventilateurs 110 des machines électriques 10 comme dans les exemples du premier mode de réalisation.

Dans ces exemples de ces deux modes de réalisation, les machines électriques sont des moteurs électriques mais pourrait aussi comporter un mode génératrice électrique entrainée par la boîte d'engrenage par exemple dans le cas où le système d'entrainement propulsion par hélice est de type hybride et comprend en outre un moteur thermique entrainant la boîte d'engrenage.

Dans ces exemples de ces deux modes de réalisation, les machines électriques sont des moteurs électriques mais pourrait aussi être des génératrices d'un système de génération d'énergie dont la boîte d'engrenage serait entrainée par un moteur thermique par exemple une turbine à gaz, moteur à piston thermique ou une hélice en mode génératrice.

Selon un mode de réalisation non représenté, le système d'entrainement propulsion par hélice comprend en outre une pile à combustible dont le circuit de refroidissement à air et/ou le circuit hydraulique permet de refroidir la pile à combustible. Par exemple la pile à combustible est intégrée dans le carter 18.

Bien entendu, dans tous ces exemples l'hélice 16 peut aussi contribuer à la ventilation de l'air rentrant dans le carter 18 du dispositif d'entrainement 1 ou 1'. Le dispositif d'entrainement 1 ou 1' peut comporter plus qu'une hélice 16 par exemple deux hélices.

Sauf précision contraire, un même élément apparaissant sur des figures différentes présente une référence unique.

## Revendications

1. Système d'entrainement (1,1') à plusieurs machines électriques comprenant :
∘ une pluralité de machines électriques comprenant un rotor, un stator et un carter,
∘ une boîte d'engrenage comprenant :
1. un engrenage par machine électrique, engrainé chacun avec le rotor de la machine électrique,
∘ un système de refroidissement (11, 11') comprenant :
1. un circuit hydraulique (11H, 11H') d'un liquide de refroidissement comprenant :
a. une partie de refroidissement dans une boîte d'engrenage (12, 12') du dispositif d'entrainement pour la refroidir, et
b. un échangeur thermique (112) air/liquide de refroidissement comprenant des parois de refroidissement formant des canaux de circulation du liquide de refroidissement pour son refroidissement,
2. un circuit de refroidissement par air (11A, 11A') comprenant :
a. une pluralité de ventilateurs (110, 110'), couplés en rotation avec la boîte d'engrenage (12, 12'),
b. une partie de refroidissement entre les parois de refroidissement de l'échangeur thermique air/liquide, dans lequel l'air aspiré et propulsé par les ventilateurs (110, 110'), circule en léchant les parois de refroidissement pour les refroidir.

2. Système d'entrainement (1,1') selon la revendication précédente, dans lequel le circuit de refroidissement par air (11A) comprend au moins un ventilateur par machine électrique et dans lequel chaque ventilateur est couplé en rotation avec la machine électrique correspondante.

3. Système d'entrainement (1,1') selon l'une des revendications précédentes dans lequel le circuit de refroidissement par air (11A, 11A') comprend au moins un conduit d'air machine (110A), ventilé par les ventilateurs (110, 110'), pour refroidir au moins une des machines électriques (10).

4. Système d'entrainement (1,1') selon la revendication précédente, dans lequel l'au moins un conduit d'air machine (110A) est une partie d'un ensemble électronique de puissance (109) des moteurs électriques (10) pour refroidir des composants de l'ensemble électronique de puissance (109).

5. Système d'entrainement (1,1') selon l'une des revendications 3 à 4, dans lequel l'au moins un conduit d'air machine (110A) permet de refroidir un bobinage d'un stator (102) de la machine électrique (10).

6. Système d'entrainement (1,1') selon l'une des revendications précédentes, dans lequel le circuit hydraulique (11H) comprend au moins un conduit partie machine électrique (110H) pour refroidir une des machines électriques (10).

7. Système d'entrainement (1, 1') selon l'une des revendications précédentes, comprenant au moins une roue de propulsion (124) engrenée par le biais de l'engrenage avec chaque rotor (100) de machine électrique (10).

8. Système d'entrainement à propulsion (1, 1') selon la revendication précédente, chaque machine électrique (10) comprend en outre un ensemble électronique de puissance (109).

9. Système d'entrainement à propulsion (1') selon la revendication précédente, comprenant une unité électronique (19) comprenant des ensembles électroniques de puissance (109) de chaque machine électrique (10) et dans lequel le circuit hydraulique est agencé pour refroidir l'unité électronique (19).

10. Système d'entrainement à propulsion (1') selon l'une des revendications 7 à 8, comprenant une unité électronique (19) comprenant des ensembles électroniques de puissance (109) de chaque machine électrique (10) et dans lequel le circuit de refroidissement par air (11A') comprend une partie pour refroidir l'unité électronique (19).

11. Système d'entrainement à propulsion (1) selon l'une des revendications 7 à 9, dans lequel chaque machine électrique (10) comprend le ventilateur (110) correspondant solidaire en rotation avec le rotor (100) de la machine électrique (10) correspondante.

12. Système d'entrainement à propulsion (1') selon l'une des revendications 7 à 9, dans lequel la boîte d'engrenage (12') comprend au moins deux ventilateurs (110) et dans lequel chaque ventilateur (110) est engrené par un engrenage couplé aux rotors (100) des machines électriques (10).

13. Véhicule à propulsion électrique à décollage et atterrissage vertical (A) comprenant un corps de transport (2) et au moins un système d'entrainement à propulsion (1, 1') par hélice à plusieurs machines électriques selon l'une des revendications 7 à 12 et au moins une hélice couplée en rotation à la roue de propulsion engrenée.

## Patentansprüche

1. Antriebssystem (1, 1') mit mehreren elektrischen Maschinen, umfassend:
∘ eine Vielzahl von elektrischen Maschinen, die einen Rotor, einen Stator und ein Gehäuse umfassen,
∘ ein Getriebe, umfassend:
1. eine Getriebestufe pro elektrischer Maschine, die jeweils mit dem Rotor der elektrischen Maschine in Eingriff steht,
∘ ein Kühlsystem (11, 11'), umfassend:
1. einen Hydraulikkreislauf (11H, 11H') für eine Kühlflüssigkeit, umfassend:
a. einen Kühlbereich in einem Getriebe (12, 12') der Antriebsvorrichtung zu ihrer Kühlung, und
b. einen Luft-/Kühlflüssigkeits-Wärmetauscher (112) mit Kühlwänden, die Strömungskanäle für die Kühlflüssigkeit bilden, um diese zu kühlen,
2. einen Luftkühlkreislauf (11A, 11A'), umfassend:
a. eine Vielzahl von Lüftern (110, 110'), die mit dem Getriebe (12, 12') drehgekoppelt sind,
b. einen Kühlbereich zwischen den Kühlwänden des Luft-/Kühlflüssigkeits-Wärmetauschers, in dem die von den Lüftern (110, 110') angesaugte und geförderte Luft an den Kühlwänden entlangströmt, um diese zu kühlen.

2. Antriebssystem (1, 1') nach dem vorstehenden Anspruch, bei dem der Luftkühlkreislauf (11A) mindestens einen Lüfter pro elektrischer Maschine umfasst und bei dem jeder Lüfter mit der entsprechenden elektrischen Maschine drehgekoppelt ist.

3. Antriebssystem (1, 1') nach einem der vorstehenden Ansprüche, bei dem der Luftkühlkreislauf (11A, 11A') mindestens einen Maschinenluftkanal (110A) umfasst, der von den Lüftern (110, 110') belüftet wird, um mindestens eine der elektrischen Maschinen (10) zu kühlen.

4. Antriebssystem (1, 1') nach dem vorstehenden Anspruch, bei dem der mindestens eine Maschinenluftkanal (110A) Teil einer elektronischen Leistungsbaugruppe (109) der Elektromotoren (10) ist, um Komponenten der elektronischen Leistungsbaugruppe (109) zu kühlen.

5. Antriebssystem (1, 1') nach einem der Ansprüche 3 bis 4, bei dem der mindestens eine Maschinenluftkanal (110A) die Kühlung einer Wicklung eines Stators (102) der elektrischen Maschine (10) ermöglicht.

6. Antriebssystem (1, 1') nach einem der vorstehenden Ansprüche, bei dem der Hydraulikkreislauf (11H) mindestens eine Leitung eines Teils der elektrischen Maschine (110H) umfasst, um eine der elektrischen Maschinen (10) zu kühlen.

7. Antriebssystem (1, 1') nach einem der vorstehenden Ansprüche, das mindestens ein Antriebsrad (124) umfasst, das über die Getriebestufe mit jedem Rotor (100) der elektrischen Maschine (10) in Eingriff steht.

8. Antriebssystem (1, 1') nach dem vorstehenden Anspruch, bei dem jede elektrische Maschine (10) ferner eine elektronische Leistungsbaugruppe (109) umfasst.

9. Antriebssystem (1') nach dem vorstehenden Anspruch, umfassend eine elektronische Einheit (19) mit elektronischen Leistungsbaugruppen (109) für jede elektrische Maschine (10), wobei der Hydraulikkreislauf zur Kühlung der elektronischen Einheit (19) ausgelegt ist.

10. Antriebssystem (1') nach einem der Ansprüche 7 bis 8, umfassend eine elektronische Einheit (19) mit elektronischen Leistungsbaugruppen (109) für jede elektrische Maschine (10), wobei der Luftkühlkreislauf (11A') einen Bereich zum Kühlen der elektronischen Einheit (19) umfasst.

11. Antriebssystem (1) nach einem der Ansprüche 7 bis 9, bei dem jede elektrische Maschine (10) den entsprechenden Lüfter (110) umfasst, der drehfest mit dem Rotor (100) der entsprechenden elektrischen Maschine (10) verbunden ist.

12. Antriebssystem (1') nach einem der Ansprüche 7 bis 9, bei dem das Getriebe (12') mindestens zwei Lüfter (110) umfasst und jeder Lüfter (110) über eine mit den Rotoren (100) der elektrischen Maschinen (10) gekoppelte Getriebestufe in Eingriff steht.

13. Elektrisch angetriebenes Fahrzeug mit vertikalem Start und vertikaler Landung (A), umfassend einen Transportkörper (2) und mindestens ein Propellerantriebssystem (1, 1') mit mehreren Elektromaschinen nach einem der Ansprüche 7 bis 12 sowie mindestens einen Propeller, der mit dem in Eingriff stehenden Antriebsrad drehgekoppelt ist.

## Claims

1. Drive system (1, 1') with several electric machines comprising:
- a plurality of electric machines comprising a rotor, a stator and a casing,
- a gearbox comprising:
- one gear per electric machine, each one meshed with the rotor of the electric machine,
- a cooling system (11, 11') comprising:
∘ a hydraulic circuit (11H, 11H') for a coolant comprising:
1. a cooling part in a gearbox (12, 12') of the drive device for cooling said gearbox, and
2. an air/coolant heat exchanger (112) comprising cooling walls forming channels for circulating coolant for the cooling thereof,
∘ an air cooling circuit (11A, 11A') comprising:
1. a plurality of fans (110, 110'), rotationally coupled to the gearbox (12, 12'),
2. a cooling part between the cooling walls of the air/liquid heat exchanger, wherein the air sucked in and propelled by the fans (110, 110'), circulates by sweeping over the cooling walls in order to cool them.

2. Drive system (1, 1') according to the preceding claim, wherein the air cooling circuit (11A) comprises at least one fan per electric machine and wherein each fan is rotationally coupled to the corresponding electric machine.

3. Drive system (1, 1') according to one of the preceding claims wherein the air cooling circuit (11A, 11A') comprises at least one machine air conduit (110A), ventilated by the fans (110, 110'), for cooling at least one of the electric machines (10).

4. Drive system (1, 1') according to the preceding claim, wherein the at least one machine air conduit (110A) is a part of a power electronics assembly (109) of the electric motors (10) to cool components of the power electronics assembly (109).

5. Drive system (1, 1') according to one of claims 3 to 4, wherein the at least one machine air conduit (110A) makes it possible to cool a winding of a stator (102) of the electric machine (10).

6. Drive system (1, 1') according to one of the preceding claims, wherein the hydraulic circuit (11H) comprises at least one electric machine part conduit (110H) for cooling one of the electric machines (10).

7. Drive system (1, 1') according to one of the preceding claims, comprising at least one propulsion wheel (124) meshed via the gear with each rotor (100) of electric machine (10).

8. Propulsion drive system (1, 1') according to the preceding claim, each electric machine (10) further comprises a power electronics assembly (109).

9. Propulsion drive system (1') according to the preceding claim, comprising an electronic unit (19) comprising power electronics assemblies (109) of each electric machine (10) and wherein the hydraulic circuit is arranged to cool the electronic unit (19).

10. Propulsion drive system (1') according to one of claims 7 or 8, comprising an electronic unit (19) comprising power electronics assemblies (109) of each electric machine (10) and wherein the air cooling circuit (11A') comprises a part to cool the electronic unit (19).

11. Propulsion drive system ( 1) according to one of claims 7 to 9, wherein each electric machine (10) comprises the corresponding fan (110) integral in rotation with the rotor (100) of the corresponding electric machine (10).

12. Propulsion drive system (1') according to one of claims 7 to 9, wherein the gearbox (12') comprises at least two fans (110) and wherein each fan (110) is meshed by a gear coupled to the rotors (100) of the electric machines (10).

13. Electrical propulsion vehicle with vertical take-off and landing (A) comprising a transport body (2) and at least one propeller-propulsion drive system (1, 1') with several electric machines according to one of claims 7 to 12 and at least one propeller rotationally coupled to the meshed propulsion wheel.
